# EUROPÄISCHE PATENTSCHRIFT

(11) **EP 1 580 391 B1**
(45) Veröffentlichungstag und Bekanntmachung des Hinweises auf die Patenterteilung: **11.07.2012**
(21) Anmeldenummer: 05005697.7
(22) Anmeldetag: 16.03.2005
(51) Int. Cl.: E06B 5/12, E05C 19/02

(54) **Verriegelung für die Abdeckung einer Gebäudeöffnung**
Lock device for a cover of an opening in a building
Dispositif de verrouillage pour l'ouvrant d'une ouverture d'un bâtiment

(30) Priorität: 22.03.2004 DE 202004004587 U
(43) Veröffentlichungstag der Anmeldung: 28.09.2005
(73) Patentinhaber: Colt International Licensing Limited, Hampshire PO9 2LY (GB)
(72) Erfinder: Winhausen, Michael, D-47533 Kleve (DE)
(74) Vertreter: Pott, Ulrich

(56) Entgegenhaltungen:
- CA-A1- 1 241 517
- US-A- 2 317 277

## Beschreibung

Die vorliegende Erfindung bezieht sich auf die Abdeckung einer Gebäudeöffnung mit einem Rahmen, an dem schwenkbeweglich ein durch eine Verriegelungsvorrichtung in einer Schließstellung gehaltener Deckel befestigt ist, wobei die Verriegelungsvorrichtung Sperrelemente aufweist, die die Verriegelungsvorrichtung bei einer Erhöhung des auf eine Fläche des Deckels wirkenden Drucks entriegeln, und mit Kraftaufnehmern, die die Bewegungsenergie des Deckels aus einer Aufschwingbewegung aufnehmen.

Aus dem Stand der Technik sind sogenannte Druckentlastungselemente bekannt. Druckentlastungselemente werden in Gebäude eingebaut, um dem sich beispielsweise bei einer Explosion in einem Gebäude aufbauenden Druck eine Öffnung zu bieten, durch die der Überdruck entweichen kann, ohne daß es zu schweren Schäden an der Gebäudesubstanz kommt, wie beispielsweise Türen, Toren, Fenstern und Wänden.

Ein Beispiel für eine gattungsgemäße Verriegelung findet sich in der Schrift CA 1 241 517. Die Verriegelungsvorrichtung hält eine Explosionsklappe mittels eines Magneten im Normalzustand geschlossen, wobei die Magnetkraft aber so gewählt ist, dass die Explosionsklappe bei einer Explosion im Gebäude freigegeben werden und aufschlagen kann. Eine Verriegelungsvorrichtung über einen Bolzen und Federstifte ist aus der Schrift US 2,317,277 bekannt.

Für die Funktion des Druckentlastungselements ist die Ausgestaltung der Verriegelungsvorrichtung von erheblicher Bedeutung. Der Schwellwert, bei dem die Verriegelungsvorrichtung öffnet, muß exakt einstellbar sein, um einerseits zu gewährleisten, daß der Deckel im Explosionsfall schnell öffnet, andererseits aber zu verhindern, daß der Deckel ungewollt entriegelt wird, wie beispielsweise durch Wind. Die Funktion der Verriegelungsvorrichtung muß auch dauerhaft gewährleistet sein, und es darf kein großer Wartungsaufwand entstehen, um die Verriegelung einsatzfähig zu halten. Beispiele für gattungsgemäße Verriegelungsvorrichtungen finden sich auch in den Schriften DE 86 02 948.7 und DE 94 04 593.3. Beide Verriegelungsvorrichtungen weisen eine vorgespannte Spiralfeder auf, gegen deren Anpreßdruck ein Schwenkhebel aufgedrückt werden muß, damit die Verriegelungsvorrichtung den Deckel freigibt. Diese Lösung ist nachteilig, weil der Mechanismus der Verriegelungsvorrichtung voll der Witterung ausgesetzt ist. Bei längerer Bewitterung der Mechanik droht Korrosion an den bewegten Teilen, und Kontaktflächen können verschmutzen und/oder aneinander festrosten. Dieses Risiko besteht insbesondere, weil die Druckentlastungselemente oft jahrelang nicht gebraucht werden und sich in dem durch das Druckentlastungselement gesicherten Gebäude eine Explosion nur eher selten ereignen wird. Dann funktioniert der Mechanismus der Entriegelung des Deckels - wenn überhaupt - nur noch erheblich schwergängiger als ursprünglich vorhergesehen. Auch ist nicht sichergestellt, ob vom Montagepersonal die Spannung der Spiralfeder auf den richtigen Schwellwert eingestellt wird. Schließlich kann die Vorspannung der Spiralfeder nachträglich leicht verstellt werden, wodurch die Verriegelungsvorrichtung nicht bei Erreichen des Schwellwertes öffnet.

Demgemäß ist es die Aufgabe der vorliegenden Erfindung, ein Druckentlastungselement in Form einer Abdeckung mit einer Verriegelungsvorrichtung zu schaffen, deren Druck-Schwellwert zur Entriegelung des Deckels zuverlässig und dauerhaft ohne einen erhöhten Wartungsaufwand einstellbar ist.

Die Aufgabe wird für eine gattungsgemäße Abdeckung gelöst, indem die Verriegelungsvorrichtung einen mit zumindest einem Vorsprung versehenen Bolzen und zumindest einen mit einer Formveränderung über den Vorsprung bewegbaren Federstift aufweist.

Eine Bolzen-/Federstiftverriegelung nimmt wenig Bauraum in Anspruch und kann leicht an geschützter Stelle in die Abdeckung integriert werden. Dadurch wird das Risiko einer korrosionsbedingten Fehlfunktion erheblich gemindert. Der Schwellwert für die Entriegelung kann leicht festgelegt werden durch die Auswahl des Materials, der Form und/oder des Durchmessers sowie der Anzahl der verwendeten Federstifte. Eine weitere Einflußgröße ist die Form und Tiefe der in den Bolzen eingebrachten Nut beziehungsweise das überstehende Maß des Vorsprungs. Es können auch mehrere Vorsprung-/Federstiftpaare bei einem Bolzen eingesetzt werden, oder es werden mehrere Bolzen mit einem oder mehreren Vorsprung-/ Federstiftpaaren in einer Abdeckung eingesetzt. Die Federstifte werden ab Werk in die Komponenten der Abdeckung eingebaut, so daß es auf der Baustelle oder später in eingebautem Zustand der Abdeckung nicht zu Fehleinstellungen oder Fehlbedienungen kommen kann. Auch entfällt eine nachträgliche Wartung der Verriegelungsvorrichtung.

Weitere Vorteile der Erfindung sowie Ergänzungen und günstige Ausgestaltungen ergeben sich aus den Merkmalen der Unteransprüche, der gegenständlichen Beschreibung und den Zeichnungen.

Die Erfindung soll nun anhand eines Ausführungsbeispiels näher erläutert werden. Es zeigen:
- Figur 1: eine Ansicht einer Abdeckung von oben,
- Figur 2: eine Querschnittsansicht entlang der Linie A-A in Figur 1,
- Figur 3: eine Querschnittsansicht entlang der Linie B-B in Figur 1,
- Figur 4: eine Querschnittsansicht der Abdeckung entlang der Linie A-A in einer Offenstellung der Abdeckung,
- Figur 5: eine Ansicht eines Bolzens,
- Figur 6: eine Querschnittsansicht entlang Linie C-C, und
- Figur 7: eine alternative Ausgestaltung zum in Figur 6 gezeigten Aufbau.

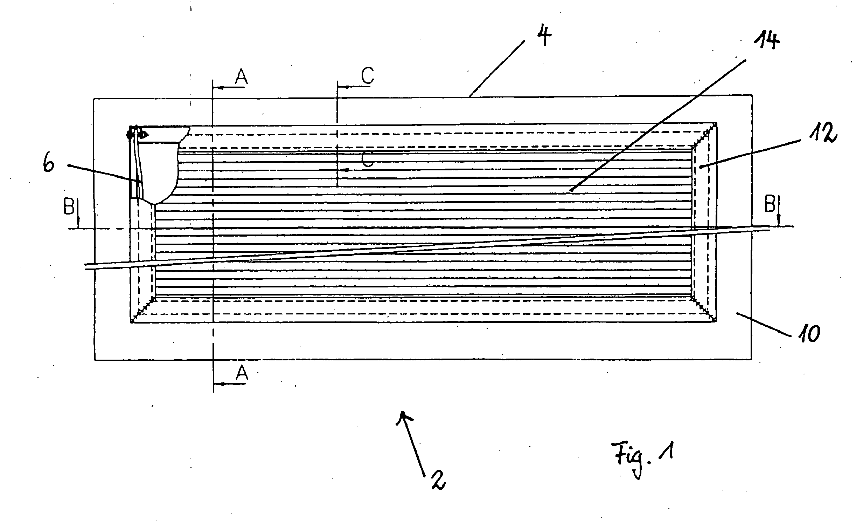

In Figur 1 ist eine Abdeckung 2 aus einer Ansicht von oben zu sehen. Der Deckel 4 ist in der oberen linken Ecke durchbrochen dargestellt. Durch die Durchbrechung ist das Koppelelement 6 sichtbar, dessen sichtbares Ende am Rahmen 8 befestigt ist. Der Deckel 4 ist im Ausführungsbeispiel zusammengesetzt aus dem Außenprofil 10, dem Innenprofil 12 und der Füllung 14. Die Füllung 14 kann aus einer leichten Polycarbonat-Platte bestehen, die lichtdurchlässig ausgeführt ist. Durch die Verwendung handelsüblicher Profile können die Herstellungskosten des Deckels 4 niedrig gehalten werden. Auf diese Weise kann die Abdeckung 2 als eine Art Fensterelement dienen. Es können jedoch auch andere Materialien für die Füllung 14 eingesetzt werden, wie Metall- oder Sperrholz, Glas, Membranfolien und dergleichen.

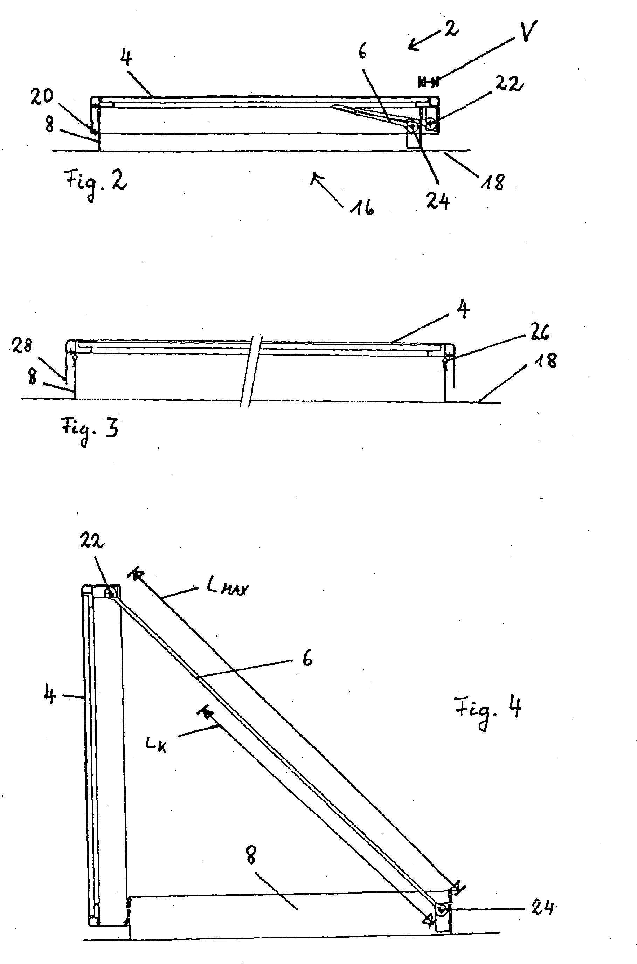

In Figur 2 ist eine Querschnittsansicht durch die Abdeckung 2 entlang der Linie A-A in Figur 1 dargestellt. Die Abdeckung 2 befindet sich in der Darstellung in einem geschlossenen Zustand und deckt eine Gebäudeöffnung 16 ab, die im Ausführungsbeispiel von einer Dachfläche 18 umgeben ist. Der Deckel 4 ist um eine Drehachse 20 schwenkbeweglich. Auf der der Drehachse 20 gegenüberliegenden Seite der Abdeckung 2 ist das Koppelelement 6 am Befestigungspunkt 22 des Deckels 4 und am Befestigungspunkt 24 des Rahmens 8 befestigt. Die Drehachse 20 liegt außerhalb des Rahmens 8. Die Halterungen für die Drehlager und die Drehlager sind in der Zeichnung nicht näher dargestellt. Durch die außerhalb des Rahmens 8 liegende Drehachse 20 kann der Deckel 4 vollständig aus dem Raum oberhalb der Fläche der Gebäudeöffnung 16 schwenken, die der Rahmen 8 umgrenzt. Auf diese Weise kann die volle Grundfläche des Rahmens 8 für den Austritt des Überdrucks genutzt werden. Der Deckel 4 ragt nicht in die Gebäudeöffnung hinein und behindert dadurch auch nicht den Austritt des Überdrucks.

Je nach Größe des Deckels 4, dessen Gewicht und den erwarteten Druckbelastungen können die für die Herstellung der Abdeckung 2 verwendeten Profile Versteifungen aufweisen, die die Stabilität der Konstruktion erhöhen. Insbesondere im Bereich der Anbindung des Koppelelements 6 an den Rahmen 8 und/oder den Deckel 4 können besondere Verstärkungen von Vorteil sein, durch die die auftretenden Kräfte besser in die Profile des Deckels 4 und/oder des Rahmens 8 eingeleitet werden. Ein einfaches Beispiel ist ein Winkelblech oder U-Profilstück, das in die Ecken des Deckels 4 eingesetzt und mit den Profilen verbunden ist, wobei ein Bolzen zur Aufnahme einer Schlaufe des Koppelelements 6 mit dem Winkelblech oder U-Profil und nicht direkt mit den Profilen des Rahmens 8 beziehungsweise Deckels 4 verbunden ist.

In Figur 3 ist eine Querschnittsansicht der Abdeckung 2 entlang der Linie B-B in Figur 1 zu sehen. In dieser Darstellung ist gut zu erkennen, daß der Rahmen 8 über die Ebene der Dachfläche 18 übersteht. Der Deckel 4 ist in seiner Schließstellung auf die Dichtung 26 des Rahmens 8 aufgelegt, die im Ausführungsbeispiel gleichzeitig auch die Oberkante des Rahmens 8 darstellt. Dabei kann je nach Ausführung entweder das Außenprofil 10, das Innenprofil 12 oder die Füllung 14 auf der Dichtung 26 aufliegen. Der Außenrand des Deckels 4 ist mit seiner Unterkante 28 so weit nach unten geführt, daß er tiefer reicht als die Dichtung 26, um diese vor Wind und Nässe zu schützen.

In Figur 4 ist die Abdeckung 2 mit einem geöffneten Deckel 4 dargestellt. Im Ausführungsbeispiel zeigt die dargestellte Offenstellung des Deckels 4 dessen maximale Öffnungsweite. Der Abstand zwischen den Befestigungspunkten 22 und 24 ist in diesem Fall auch der maximale Abstand, den die beiden Befestigungspunkte 22, 24 bei einer Öffnungsbewegung des Deckels 4 auseinander liegen können.

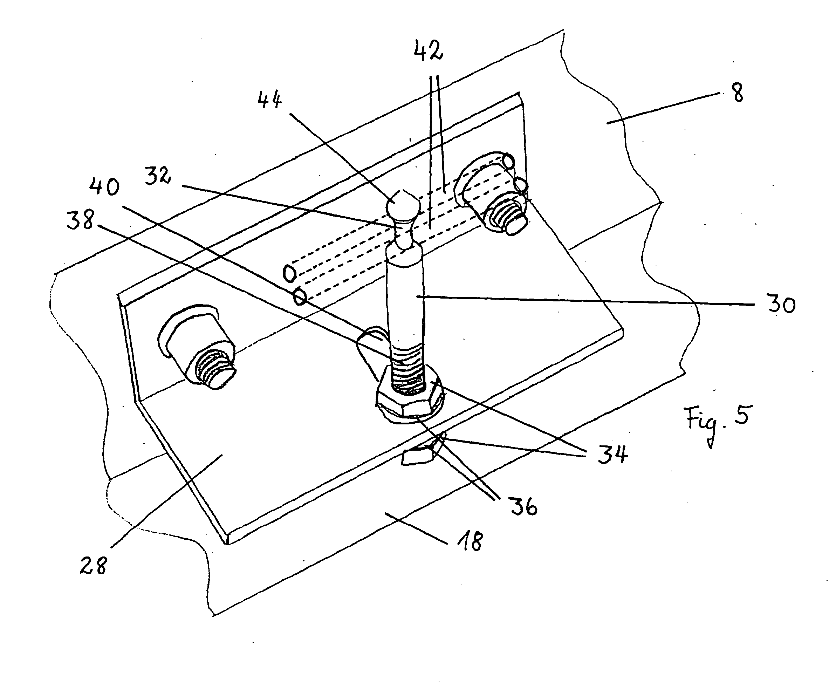

In Figur 5 ist ein Winkelprofil 28 zu sehen, daß mit einem Schenkel am Rahmen 8 befestigt ist, im Ausführungsbeispiel mit einer Schraubverbindung. Am Winkeleisen 28 ist ein mit seiner Längsmittelachse senkrecht aufragender Bolzen 30 befestigt, der an seinem oberen Ende eine ringförmig umlaufende Nut 32 aufweist. Der Bolzen 30 ist mit zwei Schraubmuttern 34 und entsprechenden Unterlegscheiben 36 über das Gewinde 38 im Langloch 40 des Winkeleisens 28 verschraubt. Durch gegenläufiges Verdrehen der beiden Muttern 34 wird der Bolzen 30 lagefixiert. Dadurch, daß der Bolzen 30 das Gewinde 38 über eine größere Höhe aufweist als der Bauhöhe der beiden Muttern 34 und gegebenenfalls Unterlegscheiben 36, kann der Bolzen 30 in unterschiedlicher Höhe lagefixiert werden. Durch eine unterschiedliche Fixierung des Bolzens 30 im Langloch 40 kann der Bolzen 30 auch in seitlicher Richtung paßgenau positioniert werden.

In Figur 5 sind in gestrichelten Linien zwei Federstifte 42 dargestellt, die in ihrer Einbaulage mit ihrem Querschnitt in die Nut 32 hineinragen. Nicht näher dargestellt in Figur 5 ist die Halterung für die beiden Federstifte 42, die im Ausführungsbeispiel am Deckel 4 befestigt sein müßten. Die Halterung sollte so ausgeführt werden, daß sie die Federstifte 42 ausreichend sicher lagefixiert, aber auch genug seitlichen Raum bereitstellt, um den Federstiften 42 bei einer Druckbelastung ein seitliches Ausweichen zu ermöglichen, um über den Vorsprung 44 des Bolzens 30 hinweg gleiten zu können.

Die Nut 32 ist im Ausführungsbeispiel als Ringnut gezeigt, sie kann jedoch auch aus einer einfachen Einkerbung oder Vertiefung bestehen. Anstelle der beiden in Figur 5 dargestellten Federstifte 42 kann natürlich auch ein einzelner oder mehrere Federstifte eingesetzt werden. Die Federstifte 42 liegen in der verriegelten Position des Deckels 4 mit einem Längenabschnitt im Bereich der Nut 32 beziehungsweise der Einkerbung oder Vertiefung des Bolzens 30 und stützen sich in dieser Lage mit einem Abschnitt ihres Außenumfangs am Vorsprung 44 des Bolzens 30 ab. In dieser Lage sind die Federstifte 42 ganz oder teilweise entspannt und schaffen so eine formschlüssige Verriegelung, die nur durch eine Formveränderung der Federstifte 42 wieder aufgehoben werden kann.

Um über den Vorsprung 44 hinüber gleiten zu können, muß ein Federstift 42 seine Form verändern, wofür ein bestimmter Kraftaufwand erforderlich ist. Die Größe des erforderlichen Kraftaufwands ist abhängig vom Maß der erforderlichen Verformung, den Maßen, der Geometrie und dem Material des Federstifts 42, der Ausgestaltung der Halterung des Federstifts 42 und anderen Faktoren. Der Federstift 42 sollte so gewählt werden, daß er sich durch ein Hinübergleiten über den Vorsprung 44 nicht dauerhaft verformt, weil sich dadurch auch die durch ihn bewirkten Haltekräfte verändern würden. Anderenfalls müßte der Federstift 42 nach jeder Öffnung des Deckels 4 ausgetauscht werden, was allerdings auch bewußt gewünscht sein kann. Der Fachmann ist dazu in der Lage, die maßgeblichen Parameter bedarfsgerecht festzulegen.

Abweichend von der Darstellung in Figur 5 kann der Bolzen 5 natürlich auch am Deckel 4 befestigt sein, in diesem Fall müßten die Federstifte 42 am Rahmen angebracht sein.

Durch die Montage des Bolzens 30 in der Abdeckung 2 in einer Lage, in der sich die Längsachse des Bolzens 30 in der Schließstellung des Deckels 4 in einer zur Ebene des Rahmens 8 im wesentlichen rechtwinkligen Ebene befindet, zeigt die Längsachse des Bolzens 30 im wesentlichen in die Richtung der Relativbewegung zwischen dem Rahmen 8 und dem Deckel 4, die erforderlich ist, um die Abdeckung 2 im Explosionsfall für den Austritt des Überdrucks zu öffnen.

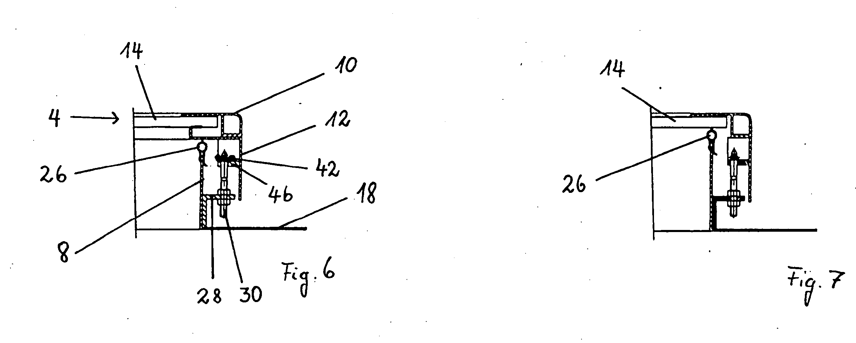

Wie sich in Figur 6 gut erkennen läßt, ist der Bolzen 30 in der Schließstellung des Deckels 4 unterhalb des Außenprofils 10 angebracht. Der Deckel 4 deckt damit den Bolzen 30 nach oben hin vollständig ab. Das Innenprofil 12 ist dabei seitlich so tief herunter gezogen, daß der Bolzen 30 und insbesondere dessen verriegelungswirksame Nut 32 und der Vorsprung 44 auch seitlich voll gegen Witterungseinflüsse geschützt ist. Dadurch, daß die Verriegelungsvorrichtung mit dem Bolzen 30 und den Federstiften 42 auf der Außenseite des Rahmens 8 angebracht ist, bleibt diese vom Innenraum des Gebäudes her praktisch unsichtbar. Durch die raumsparende Konstruktion ist die Verriegelungsvorrichtung jedoch auch von außen kaum sichtbar.

In Figur 6 ist eine Halterung 46 angedeutet, die die Federstifte 42 in ihrer Position hält. In der Schließstellung des Deckels 4 taucht der Bolzen 30 in eine Ausnehmung der Halterung 46 ein, hinter der die Federstifte 42 geschützt liegen.

Figur 7 zeigt eine alternative Ausgestaltung des Aufbaus des Deckels 4. In dem in Figur 7 dargestellten Ausführungsbeispiel liegt nicht ein Profilstück des Deckels 4 auf der Dichtung 26 auf, sondern die Füllung 14.

## Patentansprüche

1. Abdeckung (2) einer Gebäudeöffnung (16) mit einem Rahmen (8), an dem schwenkbeweglich ein durch eine Verriegelungsvorrichtung in einer Schließstellung gehaltener Deckel (4) befestigt ist, wobei die Verriegelungsvorrichtung Sperrelemente aufweist, die die Verriegelungsvorrichtung bei einer Erhöhung des auf eine Fläche des Deckels (4) wirkenden Drucks entriegeln, und mit Kraftaufnehmern, die die Bewegungsenergie des Deckels (4) aus einer Aufschwingbewegung aufnehmen, **dadurch gekennzeichnet, daß** die Verriegelungsvorrichtung einen mit zumindest einem Vorsprung (44) versehenen Bolzen (30) und zumindest einen mit einer Formveränderung über den Vorsprung (44) bewegbaren Federstift (42) aufweist.

2. Abdeckung nach Anspruch 1, **dadurch gekennzeichnet, daß** entweder der Bolzen (30) am Rahmen (8) und der Federstift (42) am Deckel (4) oder der Bolzen (30) am Deckel (4) und der Federstift (42) am Rahmen (8) befestigt ist.

3. Abdeckung nach Anspruch 1 oder 2, **dadurch gekennzeichnet, daß** der Federstift (42) in einem Abschnitt seitenbeweglich zu seiner Längsachse in einer Halterung (46) gehalten ist.

4. Abdeckung (2) nach einem der vorhergehenden Ansprüche, **dadurch gekennzeichnet, daß** sich die Längsachse des Bolzens (30) in der Schließstellung des Dekkels (4) in einer zur Ebene des Rahmens (8) im wesentlichen rechtwinkligen Ebene befindet.

5. Abdeckung (2) nach einem der vorhergehenden Ansprüche, **dadurch gekennzeichnet, daß** der Bolzen (30) in der Schließstellung des Deckels (4) unterhalb des Außenprofils des Deckels (4) angeordnet ist.

6. Abdeckung (2) nach einem der vorhergehenden Ansprüche, **dadurch gekennzeichnet, daß** der Bolzen (30) an einem Ende ein Gewinde (38) aufweist, durch die der Bolzen (30) mit Schraubmuttern (34) an einer Haltekonsole höhenjustierbar fixiert ist.

7. Abdeckung (2) nach Anspruch 6, **dadurch gekennzeichnet, daß** die Haltekonsole ein Langloch (40) aufweist, in dem der Bolzen (30) in unterschiedlicher räumlicher Lage fixierbar befestigbar ist.

8. Abdeckung (2) nach Anspruch 6 oder 7, **dadurch gekennzeichnet, daß** die Haltekonsole aus einem Winkelprofil (28) besteht, das mit einem Schenkel an einem Profil des Deckels (4) oder des Rahmens (8) befestigt und an dessen anderem Schenkel der Bolzen (30) befestigt ist.

9. Abdeckung nach einem der vorhergehenden Ansprüche, **dadurch gekennzeichnet, daß** die Verriegelungsvorrichtung auf der Außenseite des Rahmens angeordnet ist.

## Claims

1. Cover (2) for an opening (16) in a building, having a frame (8) to which a closing-off member (4), which is held in a closed position by a locking device, is fastened in such a way as to be movable by pivoting, the locking device having locking members which unlock the locking device when there is an increase in the pressure acting on an area of the closing-off member (4), and having force sensors which sense the kinetic energy of the closing-off member (4) produced by a movement to swing open, **characterised in that** the locking device has a pin (30) which is provided with at least one projection (44) and has at least one resilient rod (42) which can be moved over the projection (44) to the accompaniment of a change in shape.

2. Cover according to claim 1, **characterised in that** either the pin (30) is fixed to the frame (8) and the resilient rod (42) to the closing-off member (4), or the pin (30) is fixed to the closing-off member (4) and the resilient rod (42) to the frame (8).

3. Cover according to claim 1 or 2, **characterised in that** the resilient rod (42) is held in a mounting (46) in such a way that a section thereof is movable laterally relative to the longitudinal axis of the resilient rod (42).

4. Cover (2) according to one of the preceding claims, **characterised in that**, when the closing-off member (4) is in the closed position, the longitudinal axis of the pin (30) lies in a plane which is substantially at right angles to the plane of the frame (8).

5. Cover (2) according to one of the preceding claims, **characterised in that**, when the closing-off member (4) is in the closed position, the pin (30) is located below the outer profile of the closing-off member (4).

6. Cover (2) according to one of the preceding claims, **characterised in that** the pin (30) has at one end a thread (38) by means of which the pin (30) is fixed by nuts (34) to a mounting bracket in such a way as to be adjustable in the heightwise direction.

7. Cover (2) according to claim 6, **characterised in that** the mounting bracket has a slotted hole (40) in which the pin (30) can be fastened in place in such a way as to be fixable in different positions in space.

8. Cover (2) according to claim 6 or 7, **characterised in that** the mounting bracket comprises an angled profile (28) of which one arm is fastened to a profile of the closing-off member (4) or the frame (8) and to the other arm of which the pin (30) is fastened.

9. Cover according to one of the preceding claims, **characterised in that** the locking device is arranged on the outside of the frame.

## Revendications

1. Ouvrant (2) d'une ouverture de bâtiment (16) comprenant un cadre (8) sur lequel un couvercle (4) retenu dans une position de fermeture par un dispositif de verrouillage est fixé pivotant, le dispositif de verrouillage comprenant des éléments de verrouillage déverrouillant le dispositif de verrouillage en cas d'augmentation de la pression agissant sur une surface du couvercle (4), et comprenant des capteurs de force recevant l'énergie cinétique du couvercle (4) émanant d'un mouvement d'une personne se hissant, **caractérisé en ce que** le dispositif de verrouillage comprend un boulon (30) pourvu d'au moins une partie saillante (44) et au moins une goupille à ressort (42) mobile au-dessus de la partie saillante (44) avec déformation.

2. Ouvrant selon la revendication 1, **caractérisé en ce que** soit le boulon (30) est fixé sur le cadre (8) et la goupille à ressort (42) sur le couvercle (4) soit le boulon (30) est fixé sur le couvercle (4) et la goupille à ressort (42) sur le cadre (8).

3. Ouvrant selon la revendication 1 ou 2, **caractérisé en ce que** la goupille à ressort (42) est retenue dans un élément de retenue (46) dans une partie de manière à pouvoir se déplacer sur le côté par rapport à son axe longitudinal.

4. Ouvrant (2) selon l'une quelconque des revendications précédentes, **caractérisé en ce que** l'axe longitudinal du boulon (30) se situe dans la position de fermeture du couvercle (4) dans un plan sensiblement perpendiculaire au plan du cadre (8).

5. Ouvrant (2) selon l'une quelconque des revendications précédentes, **caractérisé en ce que** le boulon (30) est disposé dans la position de fermeture du couvercle (4) au-dessous du profilé extérieur du couvercle (4).

6. Ouvrant (2) selon l'une quelconque des revendications précédentes, **caractérisé en ce que** le boulon (30) comprend à une extrémité un filet (38) permettant de fixer le boulon (30) doté d'écrous filetés (34) sur une console de retenue de manière réglable en hauteur.

7. Ouvrant (2) selon la revendication 6, **caractérisé en ce que** la console de retenue comprend un trou oblong (40) dans lequel le boulon (30) peut être fixé dans une position spatiale différente.

8. Ouvrant (2) selon la revendication 6 ou 7, **caractérisé en ce que** la console de retenue est composée d'une cornière (28) fixée par une branche sur un profilé du couvercle (4) ou du cadre (8) et sur l'autre branche duquel est fixé le boulon (30).

9. Ouvrant selon l'une quelconque des revendications précédentes, **caractérisé en ce que** le dispositif de verrouillage est disposé sur le côté extérieur du cadre.
